# EUROPEAN PATENT SPECIFICATION

(11) **EP 0 565 025 B1**
(45) Date of publication and mention of the grant of the patent: **30.07.1997**
(21) Application number: 93105604.8
(22) Date of filing: 05.04.1993
(51) Int. Cl.: C01B 3/38, C10G 25/00

(54) **Process for producing fuel gas for fuel cell**
Verfahren zur Herstellung von Heizgas für eine Brennstoffzelle
Procédé de production de gaz combustible pour pile à combustible

(30) Priority: 06.04.1992 JP 112338/92
(43) Date of publication of application: 13.10.1993
(73) Proprietor: NIPPON OIL COMPANY, LIMITED, Tokyo (JP); PETROLEUM ENERGY CENTER, Tokyo 106 (JP)
(72) Inventor: Ino, Takashi, c/o Nippon Oil Co., Ltd., Yokohama-shi, Kanagawa (JP); Seike, Tadashi, c/o Nippon Oil Co., Ltd., Yokohama-shi, Kanagawa (JP)
(74) Representative: WILHELMS, KILIAN & PARTNER Patentanwälte

(56) References cited:
- EP-A- 0 376 419
- US-A- 4 923 836
- US-A- 5 130 115
- Journal of Catalysis 24 (1972) pages 283-285 (incomplete)

## Description

### Background of the Invention

### 1. Field of the Invention

The present invention relates to a process for producing a fuel gas for fuel cells from a hydrocarbon, and particularly to a process for producing a fuel gas for fuel cells from a heavy hydrocarbon, such as kerosine having a sulfur content not higher than 5 ppm, in the presence of a desulfurizing agent which is less liable to bring about the deposition of carbon even at a relatively high temperature and has a high service life.

### 2. Prior Art

Fuel cells are under examination on the feasibility for a power generation device for domestic or industrial uses on a demonstration plant scale by virtue of their advantages such as a high energy conversion efficiency and a low liability to cause environmental deterioration, and the establishment of the technique for using the fuel cells is expected from various fields.

The fuel cells are roughly classified into three types according to the difference in the electrolyte, that is, phosphoric acid type, fused carbonate type and solid oxide type fuel cells. At the present time, the phosphoric acid type fuel cells are thought to be in the position closest to practical use. However, the fused carbonate type and solid oxide type fuel cells are superior to the phosphoric acid type fuel cells in the energy conversion efficiency, effective use of waste heat and variety of usable fuels.

In each of the above-described fuel cells, a gas mainly composed of hydrogen is used as the fuel. In the case of the phosphoric acid type fuel cells, if the fuel gas contains carbon monoxide, the performance of the electrode is deteriorated, so that the carbon monoxide should be removed prior to the supply of the fuel gas to the body of the cell. In general, a CO conversion reaction is utilized for removing carbon monoxide, and the carbon monoxide is rendered harmless as carbon dioxide. In the fused carbonate type fuel cells, there is no need of removing carbon monoxide from the fuel gas. In the solid oxide type fuel cells, on the contrary, carbon monoxide and further light hydrocarbons are usable as a fuel like hydrogen.

Regarding the production of hydrogen to be used in the fuel cells, taking technical accessibility into consideration, studies are in progress mainly on a process for producing hydrogen by steam reforming a natural gas mainly composed of methane or a town gas mainly composed of a natural gas and a process for producing hydrogen by reforming or cracking methanol.

The fuel cells wherein use is made of a natural gas or a town gas are available, however, only in those areas where a pipeline for such a gas is provided, so that the utilization of the fuel cells are regionally limited to a great extent. Further, on the occasion of occurrence of large-scale disasters, such as earthquake, there is a considerably high possibility that the breaking of the pipeline for a town gas will shut off the gas. On the other hand, the process comprising the reforming or cracking of methanol to obtain hydrogen has a drawback that the material unit per hydrogen is considerably higher than the case of the natural gas.

If kerosine commercially available through a nationwide distribution network becomes usable as a starting material for providing hydrogen for fuel cells, the starting material can be fed to any place of the country. Further, on the occasion of occurrence of earthquake, if the fuel cell is operatable, the power generation can be continued by utilizing kerosine stocked in the area concerned. Further, the use of kerosine is advantageous in that the material unit for the production of hydrogen is lower than that of the natural gas, thus reducing the power generation cost.

In the plants where hydrogen is produced by steam reforming, light hydrocarbons, such as off-gas, natural gas, LPG or naphtha, have hitherto been used as the starting material, and the use of heavier hydrocarbons, such as kerosine, as the starting material has been regarded as difficult. This is mainly because kerosine has a higher difficulty in the desulfurization than natural gas, LPG and naphtha. A steam reforming catalyst is so sensitive to sulfur that the presence of even a very small amount of sulfur gives rise to a lowering in the catalytic activity. For this reason, in order to use the hydrocarbon as a starting material to be applied to steam reforming, the hydrocarbon should be desulfurized to such a great extent that the sulfur content in the hydrocarbon as the starting material is 0.2ppm or less, preferably 0.1ppm or less.

However, in the case of JIS No. 1 kerosine (so-called illuminating kerosine) as stipulated in JIS K 2203 (hereinafter referred to as "JIS No. 1 kerosine") and supplied for general heating purposes, a sulfur content up to 150ppm is tolerated, and commercially available kerosine has a sulfur content of about 20 to 60ppm on the average. Therefore, when the use of the JIS No. 1 kerosine as the fuel source for the fuel cell is intended, the sulfur content in the kerosine should be lowered to 0.2ppm or less.

Petroleum products are usually desulfurized by making use of a Co-Mo-based or Ni-Mo-based catalyst in the presence of hydrogen under high temperature and high pressure conditions. In order to lower the sulfur content in the JIS No. 1 kerosine to 0.2ppm or less by such a hydrodesulfurization process, the desulfurization should be conducted under a pressure as high as 20 to 100kg/cm²·G.

Since, however, the power generation making use of the fuel cells is generally conducted on a smaller scale than the usual power generation conducted by electric power companies, it is impossible to provide a large-scale desulfurization equipment for the fuel cells. In particular, in the case of distributed fuel cells having an output of 500kW or less, it is anticipated that they are installed in locations in the vicinity of buildings or basements. In this case, the desulfurization reaction should be conducted under a pressure of less than 10kg/cm²·G in view of the safety and environment in the neighborhood areas and also from the viewpoint of the related laws and regulations, particularly the High Pressure Gas Control Law. When the JIS No. 1 kerosine is hydrodesulfurized under the above-described condition, the sulfur content can be lowered to 5ppm or less, but it is difficult to lower the sulfur content to 0.2ppm or less constantly. For this reason, in order to lower the sulfur content in the kerosine to 0.2ppm or less, a kerosine should be hydrodesulfurized and further treated with a desulfurizing agent.

For this point of view, Japanese Patent Application Laid-Open Gazettes Nos. Hei.1-188404 (188404/1989), Hei.1-188405 (188405/1989) and Hei.1-188406 (188406/1989) propose a process for producing hydrogen by steam reforming a kerosine desulfurized with a nickel-based desulfurizing agent. In this case, however, the temperature at which the desulfurization can be successfully conducted is in the range of from 150 to 300°C. When the temperature exceeds 300°C, the deposition of carbon becomes so significant that the pressure drop in the desulfurization section becomes large thereby raising difficulties of the operation. Since, however, the inlet temperature of a steam reforming device located at the latter stage of the desulfurization apparatus is 400 to 500°C, it is preferred that the desulfurization temperature be close to this temperature from the viewpoint of the process. Further, Japanese Patent Application Laid-Open Gazettes Nos. Hei.2-302302 (302302/1990) and Hei.2-302303 (302303/1990) propose a fuel cell power generation system using a copper-zinc-based desulfurizing agent. The copper-zinc-based desulfurizing agent is less liable to bring about the deposition of carbon. Since, however, the desulfurization activity of the copper-zinc-based desulfurizing agent is lower than that of nickel, it is unsatisfactory for use in the desulfurization of kerosine although light hydrocarbons, such as natural gas, LPG or naphtha, can be successfully desulfurized with this desulfurizing agent.

EP-A-376419 discloses a process for producing hydrogen from hydrocarbons by contacting a hydrocarbon feed with a nickel-containing sorbant in the present of steam and hydrogen-containing gas wherein the sorbant has a nickel content of 30 to 70 % by weight. However, this process does not involve the use of the present copper-nickel alloy in the specific copper to nickel weight ratio, the total content of copper and nickel present as metals in said desulferizing agent in combination with the present carriers.

US-A-4923836 describes a dual-function catalyst consisting essentially of greater than about 1,0 % by weight of at least one nickel component, greater than about 1,0 % by weight of a copper component and an acidic component containing a crystalline molecular sieve for absorbing sulfur and isomerizing a hydrocarbon feedstock. However, whereas in this publication the upper limit of nickel and copper components in the catalyst is 32 % by weight, the lower limit of the total amount of nickel and copper in the present desulferizing agent is 40 % by weight. Also, this publication does not relate to the production of hydrogen for fuel cells nor does it refer to kerosine having a sulfur content not higher than 5 ppm.

The present invention is a process according to the general part of claim 1 with the specific features of the characterizing part of this claim. The further claims 2 to 9 refer to further embodiments of the present invention.

The present invention will be described in more detail.

In the process according to the present invention, a hydrocarbon is desulfurized with a specific desulfurizing agent and then steam reformed to produce a fuel gas for fuel cells.

The hydrocarbons to be used in the present invention is kerosine having a sulfur content not higher than 5 ppm. The sulfur content in the hydrocarbon to be used is not particularly limited, but it is preferably in the range of more than 0.2ppm to at most 5ppm. When a hydrocarbon having a sulfure content exceeding 5ppm is treated with the desulfurizing agent according to the present invention, the service life of the desulfurizing agent is so short that the desulfurizing agent should be frequently replaced.

In order to use the hydrocarbon having a sulfur content exceeding 5ppm as the starting material, it is favorable that the hydrocarbon is previously hydrodesulfurized to lower the sulfur content to 5ppm or less. In general, this can be attained by hydrodesulfurization under a high pressure in the presence of a Ni-Mo-based or Co-Mo-based catalyst. The hydrodesulfurization is conducted under the reaction conditions of a temperature in the range of from 50 to 400°C, a pressure in the range of from 10 to 100kg/cm² and a LHSV (liquid hourly space velocity) in the range of from 0.1 to 10. When a conventional kerosine is used as the starting material, the hydrodesulfurization is conducted under particular reaction conditions of a temperature in the range of from 300 to 400°C, a pressure in the range of from 10 to 100kg/cm² and a LHSV in the range of from 0.1 to 1.

In the case of a fuel cell system provided with, as the desulfurizers, both a hydrodesulfurizer and an apparatus using a desulfurizing agent, a hydrocarbon with a high a sulfur content can be directly used as the starting material for the fuel cell system. Therefore, it is also possible to use the JIS No. 1 kerosine. In this case, however, it is favorable to set the operation conditions of the hydrodesulfurizer so that the sulfur content in the hydrocarbon becomes 5ppm or less at the outlet of the hydrodesulfurizer and at the inlet of the apparatus using a desulfurizing agent.

The specific desulfurizing agent according to the present invention removes sulfur present in a very small amount in the hydrocarbon through sorption. The desulfurizing agent to be used for the present invention comprises an alloy of copper with nickel and has a copper to nickel weight ratio in terms of metals in the range of from 80 : 20 to 20 : 80, more preferably 70 : 30 to 30 : 70. It is preferred that the heavier the hydrocarbon to be treated, the higher the proportion of nickel.

Copper and nickel contained in the desulfurizing agent are preferably supported on a carrier. The carriers are exemplified by Al₂O₃, ZnO, MgO. They may be used alone or in the form of a mixture of two or more of them. The use of these carriers contributes to an improvement in the dispersibility of the copper-nickel alloy in the desulfurizing agent, an enhancement in the desulfurizing capability and, at the same time, prolongation of the service life as the desulfurizing agent. There is no particular limitation on the method for supporting copper and nickel on the carrier, and they can be supported, for example, by impregnation, coprecipitation, deposition, gel kneading, pore filling, etc. The total content of copper and nickel in the desulfurizing agent is preferably in the range of from 40 to 70% by weight, in terms of metal based on the total weight of the desulfurizing agent. The desulfurizing agent is preferably used in the form of a molded article with the consideration of the relationship with the pressure drop, and the molded article is preferably one comprising particles having a diameter regulated to about 0.5 to 10mm by tablet molding, extrusion molding, balloon molding, crush molding, or the like. Further, the desulfurizing agent preferably has a bulk density in the range of from 0.5 to 2g/ml, a surface area in the range of from 10 to 400m²/g and a pore volume in the range of from 0.1 to 1.5ml/g. It is also possible to use the desulfurizing agent according to the present invention, as such, without being supported on a carrier.

The desulfurization of the hydrocarbon in the presence of the above-described desulfurizing agent according to the present invention is preferably conducted under the conditions of a temperature in the range of from 50 to 400°C, a pressure in the range of from atmospheric pressure to 10kg/cm²·G and a LHSV value in the range of from 0.1 to 10. In particular, when kerosine is used as the hydrocarbon, the desulfurization is preferably conducted under the conditions of a temperature in the range of from 200 to 400°C, preferably in the range of from 300 exclusive to 400°C, a pressure in the range of from atmospheric pressure to 10kg/cm²·G and a LHSV value in the range of from 0.1 to 1. The sulfur content in the hydrocarbon desulfurized according to the present invention should be 0.2ppm or less, preferably 0.1ppm or less. When the hydrocarbon having a sulfur content exceeding 0.2ppm is fed to the steam reforming catalyst in the latter stage, the steam reforming catalyst deteriorates in a short period of time due to sulfur poisoning, which obstructs stable operation of the fuel cell system. For this reason, the reaction conditions in the desulfurization should be set so that the sulfur content is reduced to 0.2ppm or less.

In the process according to the present invention, the hydrocarbon desulfurized with the desulfurizing agent to a sulfur content of 0.2ppm or less is then transferred to a steam reforming column, where the hydrocarbon is reformed into a gas composed mainly of hydrogen. The steam reforming catalyst may comprise a nickel-based catalyst when the steam to carbon ratio is 3.5 or more. However, when the power generation efficiency of the fuel cell is taken into consideration, a suitable steam to carbon ratio is in the range of from 2 to 3, so that the use of a noble metal-based catalyst is preferred for the steam reforming under such conditions. Ruthenium-based and rhodium-based catalysts are particularly excellent as the noble metal-based catalyst.

The steam reforming is conducted under the reaction conditions of a catalyst bed inlet temperature in the range of from 350 to 500°C, a catalyst bed outlet temperature in the range of from 650 to 800°C, a pressure in the range of from atmospheric pressure to 10kg/cm²·G and a LHSV value in the range of from 0.1 to 10. In particular, when kerosine is used as the hydrocarbon, the steam reforming is conducted under the reaction conditions of a catalyst bed inlet temperature in the range of from 400 to 500°C, a catalyst bed outlet temperature in the range of from 700 to 800°C, a pressure in the range of from atmospheric pressure to 10kg/cm²·G and a LHSV value in the range of from 0.1 to 1.

The gas emerged from the steam reforming device comprises, on a dry basis, 60 to 80% by volume of hydrogen and 10 to 30% by volume of carbon monoxide.

When the fuel cell is a phosphoric acid type fuel cell, the reformed gas is further treated with a carbon monoxide conversion catalyst to convert carbon monoxide into carbon dioxide, which is then fed to the body of the cell. On the other hand, when the fuel cell is a fused carbonate type or solid oxide type fuel cell, the reformed gas may be fed directly to the body of the cell.

As described above, according to the process of the present invention, a fuel gas for a fuel cell mainly composed of hydrogen can be stably produced for a long period time even when a heavy hydrocarbon having a high sulfur content, such as kerosine, is used as the starting material.

The present invention will be described in more detail with reference to the following Examples, but the present invention is not limited to the embodiments described in these Examples.

### Example 1

### (1) Preparation of a desulfurizing agent comprising a copper-nickel alloy:

Purified water (deionized water) was added to 58g of copper nitrate, 69.8g of nickel nitrate, 116.6g of zinc nitrate and 60g of aluminum nitrate to prepare 1000ml of a solution. Separately, 105g of sodium carbonate was dissolved in purified water to prepare 2000ml of a solution. The resultant aqueous sodium carbonate solution was gradually added to the aqueous metallic nitrate solution with stirring to form a precipitate. When the pH value reached 7, the addition of the aqueous sodium carbonate solution was stopped. In this state, the stirring was continued for additional one hour to mature the precipitate. Thereafter, the precipitate was collected by filtration to obtain a precipitate cake.

The cake was washed several times with 1wt.% aqueous ammonium bicarbonate solution to remove sodium and then dried at 110°C for 24 hours. The dried cake was pulverized and fired at 400°C for one hour in the air. The powder as fired was molded into a tablet having a size of 5mm⌀ x 5mm. The molded article was crushed to a size of about 2 to 3 mm, packed into a desulfurization tube, heated in a hydrogen stream with caution so as not to cause heat buildup and reduced at 200°C for 16 hours.

The desulfurizing agent thus produced comprised 22% by weight of Cu, 21% by weight of Ni, 46% by weight of ZnO and 11% by weight of Al₂O₃ and had a surface area of 98m²/g.

### (2) JIS No. 1 kerosine:

A commercially available kerosine (JIS No. 1 kerosine: so-called illuminating kerosine) having the following properties was used as the starting material:
sulfur content: 32ppm,
specific gravity (15/4°C): 0.798,
boiling range: 165-265 °C,
aromatic compound content: 20.3% by volume, and
smoke point: 25mm.

### (3) Hydrodesulfurization of the JIS No. 1 kerosine:

The JIS No. 1 kerosine having the properties described in the above item (2) was desulfurized in a hydrodesulfurizer comprising a commercially available hydrodesulfurization catalyst (NiO: 5% by weight, MoO₃: 20% by weight, Al₂O₃: 75% by weight) and zinc oxide to provide a hydrodesulfurized kerosine having a sulfur content of 2ppm. The hydrodesulfurization was conducted under the conditions of a reaction temperature of 380°C, a pressure of 10kg/cm²·G and a LHSV value of 1.

### (4) Desulfurization of the JIS No. 1 kerosine hydrodesulfurized:

The kerosine hydrodesulfurized in the above item (3) was further desulfurized in the presence of the catalyst comprising a copper-nickel alloy prepared in the above item (1). The desulfurization was conducted under the reaction conditions of a temperature of 380°C, a pressure of 9kg/cm²·G, a LHSV value of 1 and a H₂/oil value of 100ml/g (an entraining gas composition of 74% by volume of H₂, 1% by volume of CO, 1% by volume of CH₄ and 24% by volume of CO₂). In the desulfurization, a stainless tube having an internal diameter of 20mm was used as the desulfurization tube and packed with 40ml of the desulfurizing agent. The sulfur content in the kerosine at the outlet of the tube was lower than the detection limit (0.05ppm) in a period from the initiation of the passing of the kerosine through the tube to 3000 hours after the initiation of the passing of the kerosine through the tube. Thereafter, the sulfur content gradually increased, and amounted to about 0.1ppm about 7000 hours after the initiation of the passing of the kerosine through the tube.

### (5) Steam reforming test:

The kerosine desulfurized in the above item (4) was steam reformed in the presence of a ruthenium catalyst (Ru: 1% by weight, Al₂O₃: 79% by weight, and CeO₂: 20% by weight).

Specifically, the catalyst used had a spherical shape having a diameter of 5mm, and 40ml of this catalyst was packed into a stainless steel reaction tube having an internal diameter of 20mm. The steam reforming was conducted under the reaction conditions of a catalyst bed inlet temperature of 450°C, a catalyst bed outlet temperature of 750°C, atmospheric pressure, a LHSV value of 1, a H₂/oil value of 100ml/g and a steam to carbon ratio of 3. Even after the lapse of 5000 hours from the initiation of the reaction, 100% of the kerosine could be reformed and the composition of the gas at the outlet was close to the thermodynamic equilibrium value. Further, no increase in the pressure drop was observed in the catalyst bed.

### Comparative Example 1

40ml of a commercially available copper-based desulfurizing agent (CuO: 36% by weight, ZnO: 47% by weight, Al₂O₃: 15% by weight, tablet having a size of 1/4 in.diam. x 1/8 in.length, surface area: 68m²/g) crushed to a size of about 2 to 3mm was packed into a reaction tube and heated in a hydrogen stream with caution so as not to cause heat buildup and reduced at 200°C for 16 hours.

The hydrodesulfurized kerosine produced in the item (3) of Example 1 was desulfurized with this desulfurizing agent. The desulfurization conditions were quite the same as those described in the item (4) of Example 1. The sulfur content in the kerosine at the outlet was 0.1ppm from the initiation of the passing of the kerosine through the tube, and amounted to 0.3ppm 500 hours after the initiation of the passing of the kerosine and 0.5ppm 1000 hours after the initiation of the passing of the kerosine.

### Comparative Example 2

40ml of a commercially available nickel-based desulfurizing agent (Ni: 34.4% by weight, tablet having a size of 1/8 in.diam. x 1/16 in.length, surface area: 147m²/g) crushed to a size of about 2 to 3mm was packed into a reaction tube and heated in a hydrogen stream with caution so as not to cause heat buildup and reduced at 200°C for 16 hours.

The hydrodesulfurized kerosine produced in the item (3) of Example 1 was desulfurized with this desulfurizing agent. The desulfurization conditions were quite the same as those described in the item (4) of Example 1. The pressure drop in the catalyst bed began to increase from the initiation of the passing of the kerosine through the tube, and amounted to 1kg/cm² 200 hours after the initiation of the passing of the kerosine. At this point of time, the reaction was ceased. During the operation, the sulfur content in the kerosine at the outlet was lower than the detection limit.

### Example 2

### (1) Preparation of a sorption-desulfurizing agent comprising a copper-nickel alloy:

Purified water was added to 26.6g of copper nitrate, 104g of nickel nitrate, 127.9g of zinc nitrate and 51.5g of aluminum nitrate to prepare 1000ml of a solution. Separately, 105g of sodium carbonate was dissolved in purified water to prepare 2000ml of a solution. The resultant aqueous sodium carbonate solution was gradually added to the aqueous metallic nitrate solution with stirring to form a precipitate. When the pH value reached 7, the addition of the aqueous sodium carbonate solution was stopped. In this state, the stirring was continued for additional one hour to mature the precipitate. Thereafter, the precipitate was collected by filtration to obtain a precipitate cake.

The cake was washed several times with a 1 wt.% aqueous ammonium bicarbonate solution to remove sodium and then dried at 110°C for 24 hours. The dried cake was pulverized and fired at 400°C for one hour in the air. The powder as fired was molded into a tablet having a size of 5mm⌀ x 5mm. The molded article was crushed to a size of about 2 to 3mm, packed into a sorption desulfurization tube, heated in a hydrogen stream with caution so as not to cause heat buildup and reduced at 200°C for 16 hours.

The desulfurizing agent thus produced comprised 10% by weight of Cu, 30% by weight of Ni, 50% by weight of ZnO and 10% by weight of Al₂O₃ and had a surface area of 95m²/g.

The hydrodesulfurized kerosine produced in the item (3) of Example 1 was desulfurized with this sorption-desulfurizing agent. The desulfurization conditions were quite the same as those described in the item (4) of Example 1. The sulfur content in the kerosine at the outlet of the tube was lower than the detection limit (0.05ppm) in a period from the initiation of the passing of the kerosine through the tube to 3300 hours after the initiation of the passing of the kerosine through the tube. Thereafter, the sulfur content gradually increased and amounted to about 0.1ppm about 7800 hours after the initiation of the passing of the kerosine through the tube.

## Claims

1. A process for producing a fuel gas for fuel cells, which comprises the steps of:
a) treating kerosine having a sulfur content not higher than 5ppm with a desulfurizing agent to reduce the sulfur content to 0.2ppm or less and
b) bringing the treated hydrocarbon into contact with a steam reforming catalyst to provide a fuel gas mainly composed of hydrogen, characterized in that said desulfurizing agent comprises a copper-nickel alloy having a copper to nickel weight ratio of 80 : 20 to 20 : 80 and a carrier consisting of at least one member selected from the group consisting of Al₂O₃, ZnO and MgO, the total content of copper and nickel in terms of metals in said desulfurizing agent being in the range of 40 to 70% by weight.

2. A process according to claim 1, wherein said kerosine is treated with said desulfurizing agent in step a) under the conditions of a temperature of 200 - 400°C, a pressure of from atmospheric pressure to 10kg/cm²·G and a LHSV value of 0.1 - 1.

3. A process according to claim 1, wherein said treated kerosine is contacted with said steam reforming catalyst in step b) under the conditions of a catalyst bed inlet temperature of 400 - 500°C, a catalyst bed outlet temperature of 700 - 800°C, a pressure of from atmospheric pressure to 10kg/cm²·G and a LHSV value of 0.1 - 1.

4. A process according to claim 1, wherein the fuel gas produced contains 60 - 80% by volume of hydrogen and 10 - 30% by volume of carbon monoxide.

5. A process of producing a fuel gas for fuel cells, which comprises the steps of:
a) hydrodesulfurizing kerosine having a sulfur content higher than 5ppm in the presence of a Ni-Mo- or Co-Mo-based catalyst to reduce the sulfur content to 5ppm or less of said hydrodesulfurized kerosine,
b) treating said hydrodesulfurized kerosine from step a) with a desulfurizing agent to reduce the sulfur content to 0.2ppm or less, and then
c) contacting said treated kerosine from step b) with a steam reforming catalyst to provide a fuel gas mainly composed of hydrogen, characterized in that said desulfurizing agent which comprises a copper-nickel alloy having a copper to nickel ratio by weight of 80 : 20 to 20 : 80 and a carrier consisting of at least one member selected from the group consisting of Al₂O₃, ZnO and MgO, and the total content of copper and nickel in terms of metals in said desulfurizing agent being in the range of 40 to 70% by weight.

6. A process according to claim 5, wherein said hydrodesulfurization in step a) is carried out under the conditions of a temperature of 300 - 400°C, a pressure of 10 - 100kg/cm²·G and a LHSV value of 0.1 - 1.

7. A process according to claim 5, wherein said kerosine is treated with said desulfurizing agent in step b) under the conditions of a temperature of 200 - 400°C, a pressure of from atmospheric pressure to 10kg/cm²·G and a LHSV value of 0.1 - 1.

8. A process according to claim 5, wherein said treated kerosine is contacted with said steam reforming catalyst in step c) under the conditions of a catalyst bed inlet temperature of 400 - 500°C, a catalyst bed outlet temperature of 700 - 800°C, a pressure of from atmospheric pressure to 10kg/cm²·G and a LHSV value of 0.1 - 1.

9. A process according to claim 5, wherein the fuel gas produced contains 60 - 80% by volume of hydrogen and 10 - 30% by volume of carbon monoxide.

## Patentansprüche

1. Verfahren zur Herstellung eines Brennstoffgases für Brennstoffzellen mit den Stufen:
a) Behandeln von Kerosin mit einem Schwefelgehalt nicht über 5 ppm mit einem Entschwefelungsmittel zur Reduzierung des Schwefelgehalts auf 0,2 ppm oder weniger und
b) Kontaktieren des behandelten Kohlenwasserstoffs mit einem Dampf-Reforming-Katalysator zur Herstellung eines Brennstoffgases, welches hauptsächlich aus Wasserstoff besteht, dadurch gekennzeichnet, daß das Entschwefelungsmittel eine Kupfer-Nickel-Legierung mit einem Kupfer-Nickel-Gewichtsverhältnis von 80 : 20 bis 20 : 80 und einen Träger, bestehend aus mindestens einer der Verbindungen Al₂O₃, ZnO und/oder MgO, enthält, wobei der Gesamtgehalt von Kupfer und Nickel als Metalle in dem Entschwefelungsmittel im Bereich von 40 bis 70 Gew.% liegt.

2. Verfahren gemäß Anspruch 1, wobei in Stufe a) das Kerosin mit dem Entschwefelungsmittel bei einer Temperatur von 200 bis 400 °C, einem Druck von atmosphärischem Druck bis 10 kg/cm²·G und einem LHSV-Wert von 0,1 bis 1 behandelt wird.

3. Verfahren gemäß Anspruch 1, wobei in Stufe b) das behandelte Kerosin mit dem Dampf Reforming-Katalysator bei einer Katalysatorbett-Eintrittstemperatur von 400 bis 500°C, einer Katalysatorbett-Austrittstemperatur von 700 bis 800°C, einem Druck von atmosphärischem Druck bis 10 kg/cm²·G und einem LHSV-Wert von 0,1 bis 1 kontaktiert wird.

4. Verfahren gemäß Anspruch 1, wobei das hergestellte Brennstoffgas 60 bis 80 Vol.% Wasserstoff und 10 bis 30 Vol.% Kohlenstoffmonoxid enthält.

5. Verfahren zur Herstellung eines Brennstoffgases für Brennstoffzellen mit den Stufen:
a) Hydrodesulfurieren von Kerosin mit einem Schwefelgehalt über 5 ppm in Gegenwart eines Katalysators auf Ni-Mo- oder Co-Mo-Basis zur Reduzierung des Schwefelgehalts des hydrodesulfurierten Kerosins auf 5 ppm oder weniger,
b) Behandeln des hydrodesulfurierten Kerosins aus Stufe a) mit Entschwefelungsmittel zur Reduzierung des Schwefelgehalts auf 0,2 ppm oder weniger und anschließendes
c) Kontaktieren des behandelten Kerosins aus Stufe b) mit einem Dampf-Reforming-Katalysator zur Herstellung eines Brennstoffgases, welches hauptsächlich aus Wasserstoff besteht, dadurch gekennzeichnet, daß das Entschwefelungsmittel eine Kupfer-Nickel-Legierung mit einem Kupfer-Nickel-Gewichtsverhältnis von 80 : 20 bis 20 : 80 und einen Träger, bestehend aus mindestens einer der Verbindungen Al₂O₃, ZnO und/oder MgO, enhält, und der Gesamtgehalt von Kupfer und Nickel als Metalle in dem Entschwefelungsmittel im Bereich von 40 bis 70 Gew.% liegt.

6. Verfahren gemäß Anspruch 5, wobei in Stufe a) das Hydrodesulfurieren bei einer Temperatur von 300 bis 400 °C, einem Druck von 10 bis 100 kg/cm²·G und einem LHSV-Wert von 0,1 bis 1 durchgeführt wird.

7. Verfahren gemäß Anspruch 5, wobei in Stufe b) das Kerosin mit dem Entschwefelungsmittel bei einer Temperatur von 200 bis 400 °C, einem Druck von atmosphärischem Druck bis 10 kg/cm²·G und einem LHSV-Wert von 0,1 bis 1 behandelt wird.

8. Verfahren gemäß Anspruch 5, wobei in Stufe c) das behandelte Kerosin mit dem Dampf-Reforming-Katalysator bei einer Katalysatorbett-Eintrittstemperatur von 400 bis 500°C, einer Katalysatorbett-Austrittstemperatur von 700 bis 800°C, einem Druck von atmosphärischem Druck bis 10 kg/cm²·G und einem LHSV-Wert von 0,1 bis 1 kontaktiert wird.

9. Verfahren gemäß Anspruch 5, wobei das hergestellte Brennstoffgas 60 bis 80 Vol.% Wasserstoff und 10 bis 30 Vol.% Kohlenmonoxid enthält.

## Revendications

1. Un procédé de production d'un gaz combustible pour des piles à combustible, qui comprend les étapes consistant à :
a) traiter un kérosène ayant une teneur en soufre de pas plus de 5 ppm avec un agent de désulfuration de manière à réduire la teneur en soufre à 0,2 ppm ou moins et
b) mettre en contact la matière hydrocarbonée traitée avec un catalyseur de reformage à la vapeur d'eau de manière à obtenir un gaz combustible composé principalement d'hydrogène, caractérisé en ce que l'agent de désulfuration comprend un alliage cuivre-nickel ayant un rapport en poids du cuivre au nickel compris entre 80 : 20 et 20 : 80 et un support constitué d'au moins un membre choisi dans le groupe constitué par Al₂O₃, ZnO et MgO, la teneur totale en cuivre et nickel, exprimée en métaux, dans l'agent de désulfuration étant comprise entre 40 et 70 % en poids.

2. Un procédé selon la revendication 1, dans lequel le kérosène est traité avec l'agent de désulfuration dans l'étape a) dans les conditions d'une température de 200 à 400°C, d'une pression comprise entre la pression atmosphérique et 10 kg/cm² et d'une LHSV de 0,1 à 1.

3. Un procédé selon la revendication 1, dans lequel le kérosène traité est mis en contact avec le catalyseur de reformage à la vapeur d'eau dans l'étape b) dans les conditions d'une température d'entrée dans le lit de catalyseur de 400 à 500°C, d'une température de sortie du lit de catalyseur de 700 à 800°C, d'une pression comprise entre la pression atmosphérique et 10 kg/cm² et d'une LHSV de 0,1 à 1.

4. Un procédé selon la revendication 1, dans lequel le gaz combustible produit contient 60 à 80 % en volume d'hydrogène et 10 à 30 % en volume de monoxyde de carbone.

5. Un procédé de production d'un gaz combustible pour des piles à combustible, qui comprend les étapes consistant à :
a) hydrodésulfurer un kérosène ayant une teneur en soufre supérieure à 5 ppm en présence d'un catalyseur à base de Ni-Mo ou à base de Co-Mo de manière à réduire la teneur en soufre du kérosène hydrodésulfuré à 5 ppm ou moins,
b) traiter le kérosène hydrodésulfuré résultant de l'étape a) avec un agent de désulfuration de manière à réduire la teneur en soufre à 0,2 ppm ou moins, et ensuite
c) mettre en contact le kérosène traité résultant de l'étape b) avec un catalyseur de reformage à la vapeur d'eau de manière à obtenir un gaz combustible composé principalement d'hydrogène, caractérisé en ce que l'agent de désulfuration comprend un alliage cuivre-nickel ayant un rapport en poids du cuivre au nickel compris entre 80 : 20 et 20 : 80 et un support constitué d'au moins un membre choisi dans le groupe formé par Al₂O₃, ZnO et MgO et la teneur totale en cuivre et nickel, exprimée en métaux, dans l'agent de désulfuration est comprise entre 40 et 70 % en poids

6. Un procédé selon la revendication 5, dans lequel l'hydrodésulfuration dans l'étape a) est effectuée dans les conditions d'une température de 300 à 400°C, d'une pression de 10 à 100 kg/cm² et d'une LHSV de 0,1 à 1.

7. Un procédé selon la revendication 5, dans lequel le kérosène est traité avec l'agent de désulfuration dans l'étape b) dans les conditions d'une température de 200 à 400°C, d'une pression comprise entre la pression atmosphérique et 10 kg/cm² et d'une LHSV de 0,1 à 1.

8. Un procédé selon la revendication 1, dans lequel le kérosène traité est mis en contact avec le catalyseur de reformage à la vapeur d'eau dans l'étape c) dans les conditions d'une température d'entrée dans le lit de catalyseur de 400 à 500°C, d'une température de sortie du lit de catalyseur de 700 à 800°C, d'une pression comprise entre la pression atmosphérique et 10 kg/cm² et d'une LHSV de 0,1 à 1.

9. Un procédé selon la revendication 5, dans lequel le gaz combustible produit contient 60 à 80 % en volume d'hydrogène et 10 à 30 % en volume de monoxyde de carbone.
